# EUROPÄISCHE PATENTSCHRIFT

(11) **EP 1 075 077 B1**
(45) Veröffentlichungstag und Bekanntmachung des Hinweises auf die Patenterteilung: **17.06.2009**
(21) Anmeldenummer: 99115416.2
(22) Anmeldetag: 04.08.1999
(51) Int. Cl.: H02K 15/03, H01F 13/00

(54) **Verfahren zur Magnetisierung von in einem Rückschlussgehäuse gehaltenen Polschuhen eines über Bürsten gespeisten permanenterregten Kommutatormotors und Vorrichtung zur Durchführung des Verfahrens**
Method for the magnetization of pole pieces of a PM commutator motor and device for carrying out the same
Procédé pour l'aimantation de pièces polaires de moteur à balais d'aimants permanents, et dispositif pour la réalisation dudit procédé

(43) Veröffentlichungstag der Anmeldung: 07.02.2001
(73) Patentinhaber: Brose Fahrzeugteile GmbH & Co. KG, 97076 Würzburg (DE)
(72) Erfinder: Hartel, Gerd, 97273 Kürnach (DE); Steegmüller, Horst, 97076 Würzburg (DE)
(74) Vertreter: Reinhard - Skuhra - Weise & Partner GbR

(56) Entgegenhaltungen:
- EP-A- 0 849 865
- US-A- 5 075 814
- PATENT ABSTRACTS OF JAPAN vol. 012, no. 246 (E-632), 12. Juli 1988 (1988-07-12) & JP 63 035156 A (MATSUSHITA ELECTRIC IND CO LTD), 15. Februar 1988 (1988-02-15)
- PATENT ABSTRACTS OF JAPAN vol. 007, no. 123 (E-178), 27. Mai 1983 (1983-05-27) & JP 58 043167 A (MITSUBISHI DENKI KK), 12. März 1983 (1983-03-12)

## Beschreibung

Die Erfindung bezieht sich auf ein Verfahren zur Magnetisierung von in einem Rückschlußgehäuse gehaltenen Polschuhen eines über Bürsten gespeisten permanenterregten Kommutatormotors mittels einer Magnetisierungsvorrichtung mit den Polschuhen jeweils zugeordneten Haupt-Magnetisierungsspulen sowie auf eine Vorrichtung zur Durchführung eines derartigen Verfahrens.

Bei der Herstellung von, insbesondere statorseitig, permanenterregten Motoren werden oftmals anstelle von Dauermagnet-Schalen zunächst unmagnetische Polschuhe, insbesondere gesinterte FE-Polschuhe, erst nach ihrem Einbau in ein Rückschlußgehäuse durch eine zugeordnete Magnetisierungsvorrichtung mit einem gezielten Magnetfeld "beschossen" und entsprechend magnetisiert. Diese Vorgehensweise ist beispielsweise aus der EP 0 849 865 A1 bekannt.

Zur Erzielung einer optimalen Leistung und/oder Verhinderung eines übermäßigen Bürstenverschleisses des Kommutatormotors sollte die durch jeweils zwei magnetisierte Polschuhe eines Polpaares definierte Polachse einerseits und die zugehörige durch die stromzuführende und stromabführende Bürste festgelegte Bürstenachse in einem bestimmten Winkel, in der Regel 90° elektrisch, zueinander ausgerichtet sein; zur Berücksichtigung einer bei Ankerbestromung zusätzlich gegebenen Ankerrückwirkung kann zur weiteren Optimierung um ein geringes Maß von diesem Winkel abgewichen werden.

Aufgrund von Bauteil- und/oder Montagetoleranzen besteht, insbesondere bei einer Großserienfertigung als Massenartikel, die Gefahr daß die Polschuhachse relativ zur Bürstenachse nicht ihre im Sinne eines maximalen Drehmomentes optimale Lage erreicht. Derartige Toleranzen wirken sich mit zunehmender Polpaarzahl nachteiliger aus und führen zu entsprechenden höheren Fehler- bzw. Ausschußraten, falls nicht die Positionstoleranzen der Polschuhaufnahme im Gehäuse bzw. der Köcherstellung der Bürsten im gehäuseseitig fixerten Bürstensystem sowie die Bauteiltoleranzen der Polschuhe, der Köcher bzw. der Bürsten selbst unter Inkaufnahme eines erhöhten Kostenaufwandes reduziert werden.

Gemäß Aufgabe vorliegender Erfindung soll mit fertigungs- und montagetechnisch geringem Aufwand unter Inkaufnahme von für einen Massenserienartikel üblichen Bauteiltoleranzen trotzdem unter Vermeidung einer zu großen Motorleistungsstreuung eine maximale Motorleistung gewährleistet werden können.

Die Lösung dieser Aufgabe gelingt erfindungsgemäß durch ein Verfahren gemäß Patentanspruch 1 sowie eine Vorrichtung zur Durchführung dieses Verfahrens gemäß Patentanspruch 7; vorteilhafte Ausgestaltungen des Verfahrens sind Gegenstand der Ansprüche 2 bis 6, eine vorteilhafte Ausgestaltung der Vorrichtung ist Gegenstand des Patentanspruchs 8.

Das erfindungsgemäße Verfahren und die erfindungsgemäße Vorrichtung ermöglichen unter Hinnahme der bei einer Massen-Serienfertigung nicht zu vermeidenden Bauteil- bzw. Montagetoleranzen auch bei höherpoligen, z.B. 6-poligen, dauermagneterregten kommutatorgespeisten Gleichstrommotoren die für ein maximales Motordrehmoment optimale Ausrichtung der Magnetfeldachse der magnetisierten Polschuhe relativ zu der zugehörigen Bürstenachse.

Nach einer ersten Ausgestaltung der Erfindung ist eine Drehwinkelverstellung der Magnetisierung der Magnetisierungs-Vorrichtung im Sinne einer optimalen Ausrichtung der Magnetfeldachse der magnetisierten Polschuhe relativ zur Bürstenachse dadurch vorgesehen, daß die Magnetisierungsvorrichtung relativ zu dem Rückschlußgehäuse und/oder das Rückschlußgehäuse mit den darin fixierten Polschuhen oder den dazu ausgerichteten Bürsten relativ zu der Magnetisierungsvorrichtung um den entsprechend notwendigen Stellwinkel verdreht wird.

Nach einer weiteren besonders vorteilhaften Ausgestaltung der Erfindung kann auf eine montageerschwerende gegenseitige Verstellmöglichkeit von Magnetisierungsvorrichtung zum Rückschlußgehäuse mit Polschuhen dadurch verzichtet werden, daß eine Zusatz-Magnetisierung, insbesondere mittels zu den Haupt-Magnetisierungsspulen der Magnetisierungsvorrichtung winkelverstellten Zusatz-Magnetisierungsspulen, vorgesehen ist, durch die eine Winkelstellung der insgesamt wirksamen Magnetfeldachse der Hauptmagnetisierung im erfindungsgemäßen Sinne einstellbar ist; anstelle der Zusatzmagnetisierungsspulen sind nach einer weiteren Ausgestaltung der Erfindung Zusatz-Dauermagnete vorgesehen.

Das Maß der notwendigen Verstellung kann durch im Einzelfall festzustellende Toleranzverschiebung der Bauteile relativ zu ihrer Aufnahme, insbesondere der Polschuhe bzw. der Bürsten relativ zum Rückschlußgehäuse, oder bei in vorteilhafter Weise bereits zusammengebautem Kommutatormotor durch einen Probelauf dadurch ermittelt werden, daß das Hochlaufverhalten bzw. die maximal erreichbare Drehzahl des jeweils einzelnen Motors, vorzugsweise im Leerlaufbetrieb, mit dem eines optimal toleranzfreien Motors bei Nennspannung verglichen wird.

Die Erfindung sowie weitere vorteilhafte Ausgestaltungen der Erfindung werden im folgenden anhand schematisch dargestellter Ausführungsbeispiele in der Zeichnung näher erläutert; darin zeigen:

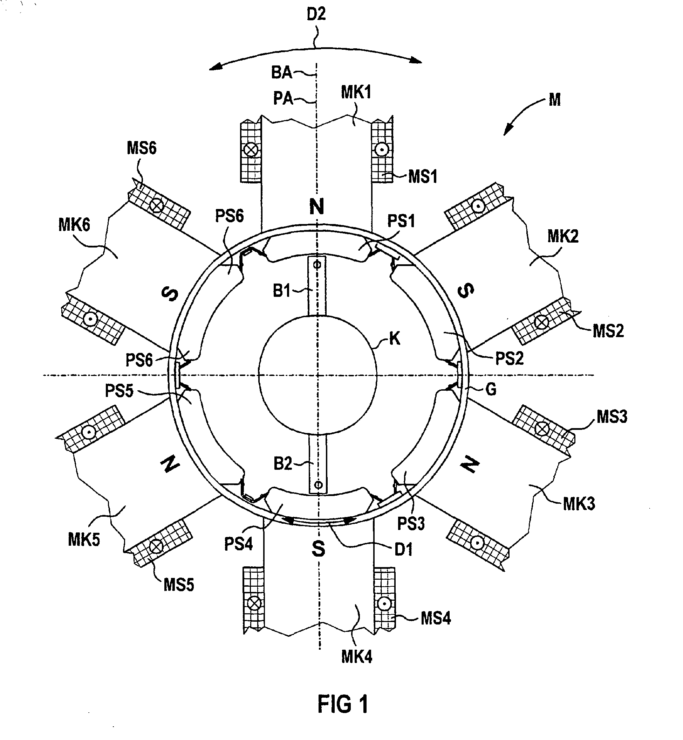

- FIG 1: eine Schnittdarstellung eines 6-poligen Kommutatormotors mit idealer symmetrischer, im Sinne eines maximalen Drehmomentes ausgerichteter Polschuhachse und Magnetfeldachse zur Bürstenachse;

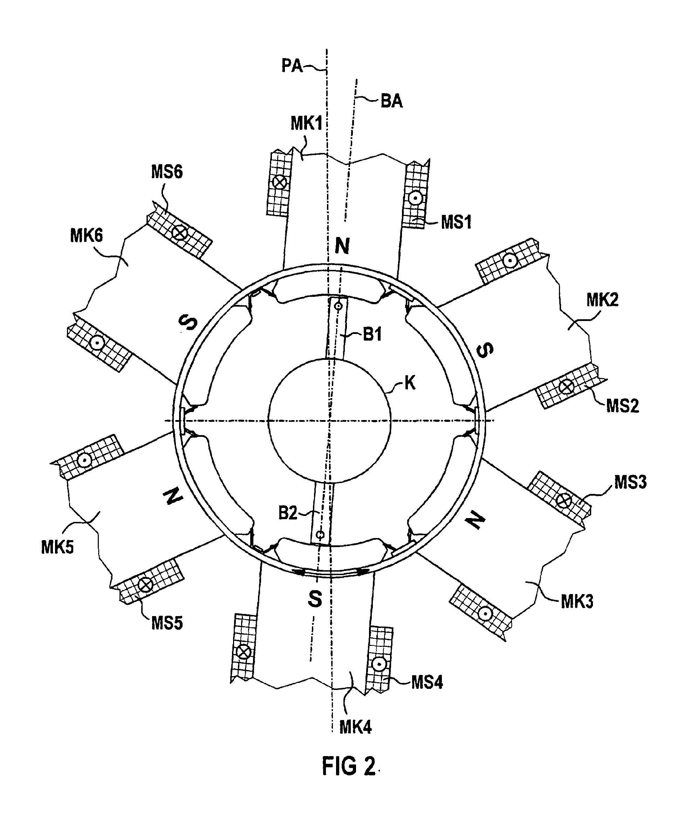

- FIG 2: die Schnittdarstellung des Motors gemäß FIG 1 bei einer Fehlstellung der Polschuhachse gegenüber der Bürstenachse und einer Verstellung der Magnetisierungsvorrichtung relativ zu dem Rückschlußgehäuse, derart daß die Magnetfeldachse der Polschuhe nach deren Magnetisierung optimal zur Bürstenachse ausgerichtet ist;

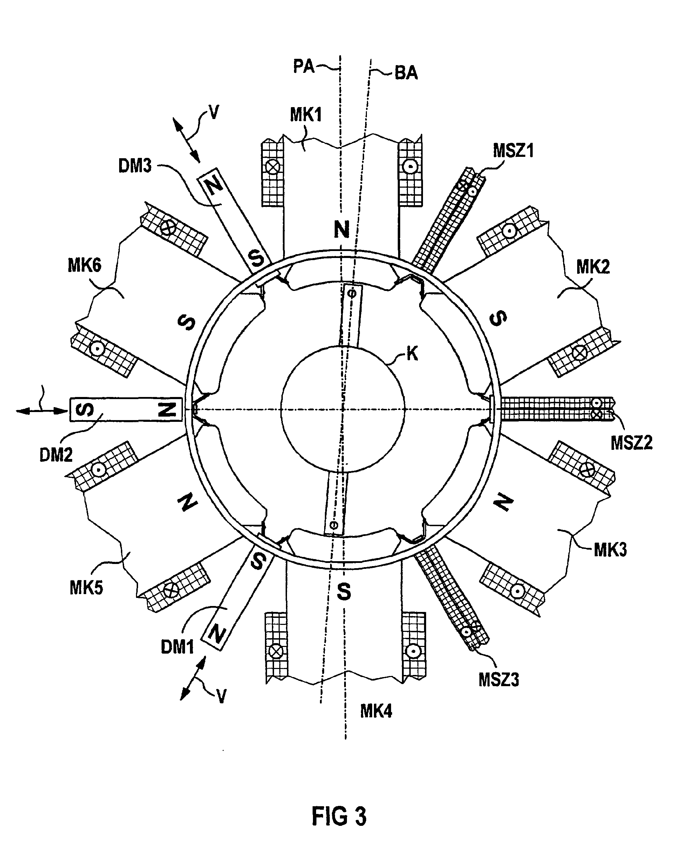

- FIG 3: eine Schnittdarstellung des Motors gemäß FIG 1 mit einer Fehlstellung der Polschuhachse gegenüber der Bürstenachse und optimaler Ausrichtung der Magnetfeldachsen der Polschuhe nach ihrer Magnetisierung durch eine Zusatzmagnetisierung bei feststehend verbleibender Zuordnung von Magnetisierungungsvorrichtung und Rückschlußgehäuse.

Die Figuren 1-3 zeigen jeweils in einem Radialschnitt ein als Rückschlußgehäuse G dienendes Motorgehäuse in einer außen angesetzten Magnetisierungsvorrichtung M. Am Innenumfang des Rückschlußgehäuses G sind in an sich bekannter Montagetechnik Sintereisen-Polschuhe PS1-PS6 durch stirnseitig eingreifende Klemmstücke fixiert. Die hier nicht näher dargestellte Rotorwicklung wird über Bürsten B1;B2 bestromt, die einander gegenüberliegend in einer Bürstenachse BA einen Kommutator K beschleifen, an den die nicht dargestellte Rotorwicklung angeschlossen ist. Zur Magnetisierung der Polschuhe PS1-PS6 dient die äußere Magnetisierungsvorrichtung M mit jeweils einem Polschuh PS1-PS6 zugeordneter, auf einen Kern MK1-MK6 aufgewickelter Haupt-Magnetisierungsspule MS1-MS6.

FIG 1 stellt die für ein maximales Drehmoment bzw. eine maximale Motorleistung optimale Ausrichtung der Polachse PA der Polschuhe PS1-PS6 zu der Bürstenachse BA der Bürsten B1;B2 dar, wobei bei einer Magnetisierung der Polschuhe PS1-PS6 durch die Magnetisierungsvorrichtung M die Magnetfeldachse der Polschuhe PS1-PS6 einerseits im Sinne eines maximalen Momentes bzw. einer maximalen Leistung zur Bürstenachse BA und andererseits mit der Polschuhachse PA im Sinne einer symmetrischen Magnetfeldverteilung über den jeweiligen Polschuh PS1-PS6 ausgerichtet ist.

FIG 2 zeigt eine toleranzbedingte Fehlstellung zwischen der Polschuhachse PA einerseits und der Bürstenachse BA andererseits, derart daß die Bürstenachse BA gegenüber der Polschuhachse PA im Uhrzeigersinn um einen gewissen Winkel drehwinkelverstellt ist. Zur erfindungsgemäßen Gewährleistung eines maximalen Motor-Drehmomentes oder dergleichen ist die in Umfangsrichtung D2 drehwinkelverstellbare Magnetisierungsvorrichtung M im gleichen Sinne relativ zu dem die Polschuhe PS1-PS6 fixierend aufnehmenden Rückschlußgehäuse G verstellt, daß die Magnetfeldachse der Polschuhe PS1-PS6, unter Inkaufnahme einer gegebenenfalls dadurch bedingten unsymmetrischen Magnetfeldverteilung über die tangentiale Breite eines jeden Polschuhes PS1-PS6, wieder gemäß der Darstellung in FIG 1 optimal ausgerichtet ist. Anstelle einer tangentialen Winkelverstellung der Magnetisierungsvorrichtung M relativ zu dem Rückschlußgehäuse G kann auch eine entsprechende gegensinnige Verstellung des in Umfangsrichtung D1 drehwinkelverstellbaren Rückschlußgehäuses G relativ zur Magnetisierungsvorrichtung M vorgesehen werden.

FIG 3 zeigt eine vorteilhafte Ausgestaltung des Verfahrens bzw. insbesondere der erfindungsgemäßen Vorrichtung, derart daß auf eine gegenseitige Drehwinkelverstellung zwischen Magnetisierungsvorrichtung M einerseits und dem mit den Polschuhen PS1-PS6 sowie den Bürsten B1;B2 versehenen Rückschlußgehäuse G bei entsprechender einfacher Werkstückaufnahme in einer Montagefertigungsstrecke dadurch verzichtet werden kann, daß die Magnetisierungsvorrichtung M neben ihren Haupt-Magnetisierungsspulen MS1-MS6 eine drehwinkelverstellte Zusatzmagnetisierung aufweist, die hier durch, vorteilhaft stromsteuerbare, Zusatz-Magnetisierungsspulen MSZ1-MSZ3 bzw. durch, vorteilhaft in Verstellrichtung V steuerbare, Zusatz-Dauermagnete DM1-DM3 angedeutet ist.

## Patentansprüche

1. Verfahren zur Magnetisierung von in einem Rückschlußgehäuse (G) gehaltenen Polschuhen (PS1-PS6) eines über Bürsten (B1;B2) gespeisten dauermagneterregten Kommutatormotors mittels einer Magnetisierungsvorrichtung (M) mit den Polschuhen (PS1-PS6) jeweils zugeordneten Haupt-Magnetisierungsspulen (MS1-MS6) mit den Verfahrensschritten:
- Überprüfen einer, insbesondere fertigungs- bzw. montagebedingten, toleranzbehafteten Abweichung der jeweiligen im Sinne eines maximalen Motor-Drehmomentes optimalen Lage der Polschuhachse (PA) relativ zur zugehörigen Lage der Bürstenachse (BA);
- Drehwinkelverstellen der Magnetisierung der Magnetisierungsvorrichtung (M) relativ zu den Polschuhen (PS1-PS6) im Sinne einer hinsichtlich eines maximalen Motor-Drehmoments optimalen Lage der Magnetfeldachse der magnetisierten Polschuhe (PS1-PS6) relativ zu der zugehörigen Bürstenachse (BA) unter Beibehaltung der toleranzbehafteten Motor-Bauteilezuordnung und gegebenenfalls Inkaufnahme einer zu der Polschuhachse (PA) unsymmetrischen Magnetfeldverteilung in dem jeweiligen Polschuh (PS1-PS6).

2. Verfahren nach Anspruch 1 mit dem Verfahrensschritt:
- Drehwinkelverstellen des Rückschlußgehäuses (G) mit den darin gehaltenen, anschließend zu magnetisierenden Polschuhen (PS1-PS6) relativ zu der Magnetisierungsvorrichtung (M).

3. Verfahren nach Anspruch 1 mit dem Verfahrensschritt:
- Drehwinkelverstellen der Magnetisierungsvorrichtung (M) relativ zu dem Rückschlußgehäuse (G) mit den darin gehaltenen, anschließend zu magnetisierenden Polschuhen (PS1-PS6).

4. Verfahren nach Anspruch 1 mit dem Verfahrensschritt:
- Drehwinkelverstellen der Magnetfeldachse der Magnetisierungsvorrichtung (M) durch eine gegenüber der Feldachse der Haupt-Magnetisierungsspulen (MS1-MS6) jeweils winkelversetzte Zusatz-Magnetisierung.

5. Verfahren nach zumindest einem der Ansprüche 1-4 mit folgendem Verfahrensschritt:
- Drehwinkelfeststellen der jeweils notwendigen Drehwinkelverstellung durch Vermessen der montierten Bauteile, insbesondere der im Rückschlußgehäuse (G) gehaltenen Polschuhe (PS1-PS6) relativ zu den am Rückschlußgehäuse (G) fixierten bzw. ausgerichteten Bürsten (B1;B2).

6. Verfahren nach zumindest einem der Ansprüche 1-5 mit folgendem Verfahrensschritt:
- Drehwinkelfeststellen der jeweils notwendigen Drehwinkelverstellung durch Vergleich der individuellen Leistung eines vorab magnetisierten Elektromotors mit der theoretisch maximalen Leistung und anschließende Nachmagnetisierung im Sinne eines drehmomentoptimalen Ausrichtung von Polschuhachse (PA) zur Bürstenachse (BA).

7. Vorrichtung zur Durchführung des Verfahrens nach einem der Ansprüche 1-6,
- mit einer ein Rückschlußgehäuse (G) eines über in bzw. relativ zu dem Rückschlußgehäuse (G) fixierten Bürsten (B1;B2) gespeisten Kommutatormotors umgebenden Magnetisierungsvorrichtung (M) mit jeweils in dem Rückschlußgehäuse (G) umfangsseitig gehaltenen Polschuhen (PS1-PS6) zugeordneten Magnetisierungsspulen (MS1-MS6);
- mit einer Einrichtung zur Drehwinkelverstellung (D1,D2) des Rückschlußgehäuses (G) relativ zu der Magnetisierungsvorrichtung (M) und/oder zur Drehwinkelverstellung der Magnetisierungsvorrichtung (M) relativ zu dem Rückschlußgehäuse (G).

8. Vorrichtung zur Durchführung des Verfahrens nach Anspruch 4,
- mit jeweils zu den Haupt-Magnetisierungsspulen (MS1-MS6) der Magnetisierungsvorrichtung (M) seitlich drehwinkelverstellten Zusatz-Magnetisierungsspulen (MSZ1-MSZ3) oder Zusatz-Dauermagneten (DM1-DM3).

## Claims

1. Method for magnetizing pole shoes (PS1-PS6), which are held in a magnetic return path housing (G), of a commutator motor, which is fed via brushes (B1; B2) and exhibits permanent-magnet excitation, by means of a magnetization apparatus (M) with main magnetization coils (MS1-MS6) which are in each case associated with the pole shoes (PS1-PS6), comprising the method steps of:
- checking a deviation, which is subject to tolerances and, in particular, is induced for production or assembly reasons, of the respective position, which is optimum for the purpose of a maximum motor torque, of the pole shoe axis (PA) relative to the associated position of the brush axis (BA);
- adjusting the rotary angle of the magnetization of the magnetization apparatus (M) relative to the pole shoes (PS1-PS6) for the purpose of achieving a position, which is optimum in terms of a maximum motor torque, of the magnetic field axis of the magnetized pole shoes (PS1-PS6) relative to the associated brush axis (BA) while maintaining the motor component association, which is subject to tolerances, and possibly acceptance of a magnetic field distribution, which is not symmetrical in relation to the pole shoe axis (PA), in the respective pole shoe (PS1-PS6).

2. Method according to Claim 1, comprising the method step of:
- adjusting the rotary angle of the magnetic return path housing (G) together with the pole shoes (PS1-PS6), which are held therein and are subsequently to be magnetized, relative to the magnetization apparatus (M).

3. Method according to Claim 1, comprising the method step of:
- adjusting the rotary angle of the magnetization apparatus (M) relative to the magnetic return path housing (G) together with the pole shoes (PS1-PS6) which are held therein and are subsequently to be magnetized.

4. Method according to Claim 1, comprising the method step of:
- adjusting the rotary angle of the magnetic field axis of the magnetization apparatus (M) by additional magnetization which has an angular offset relative to the field axis of the main magnetization coils (MS1-MS6) in each case.

5. Method according to at least one of Claims 1 to 4, comprising the following method step of:
- determining the rotary angle of the respectively required rotary angle adjustment by measuring the mounted components, in particular the pole shoes (PS1-PS6) which are held in the magnetic return path housing (G), relative to the brushes (B1; B2) which are fixed to or aligned in relation to the magnetic return path housing (3).

6. Method according to at least one of Claims 1 to 5, comprising the following method step of:
- determining the rotary angle of the respectively required rotary angle adjustment by comparing the individual power of a previously magnetized electric motor with the theoretical maximum power and subsequent post-magnetization for the purpose of alignment of the pole shoe axis (PA) with the brush axis (BA) so as to optimize the torque.

7. Apparatus for carrying out the method according to one of Claims 1 to 6,
- having a magnetization apparatus (M), which surrounds a magnetic return path housing (G) of a commutator motor which is fed via brushes (B1; B2) which are fixed in or relative to the magnetic return path housing (G), said magnetization apparatus having magnetization coils (MS1-MS6) which are associated with pole shoes (PS1-PS6) which are in each case held in the periphery of the magnetic return path housing (G);
- having a device for rotary angle adjustment (D1, D2) of the magnetic return path housing (G) relative to the magnetization apparatus (M) and/or for rotary angle adjustment of the magnetization apparatus (M) relative to the magnetic return path housing (G).

8. Apparatus for carrying out the method according to Claim 4,
- having additional magnetization coils (MSZ1-MSZ3) or additional permanent magnets (DM1-DM3), of which the rotary angles are laterally adjusted in relation to the main magnetization coils (MS1-MS6) of the magnetization apparatus (M) in each case.

## Revendications

1. Procédé pour la magnétisation de pièces polaires (PS1 à PS6), maintenues dans un boîtier de blindage (G), d'un moteur à collecteur excité par aimants permanents et alimenté par balais (B1 ; B2) au moyen d'un dispositif de magnétisation (M) avec des bobines de magnétisation principales (MS1 à MS6) associées respectivement aux pièces polaires (PS1 à PS6), comportant les étapes suivantes :
- vérification d'un écart, conditionné notamment par la fabrication ou le montage et soumis à tolérance, de la position respective, optimale dans le sens d'un couple moteur maximal, de l'axe de pièces polaires (PA) par rapport à la position associée de l'axe de balais (BA) ;
- réglage d'écart angulaire de la magnétisation du dispositif de magnétisation (M) par rapport aux pièces polaires (PS1 à PS6) en vue d'obtenir une position optimale, dans le sens d'un couple moteur maximal, de l'axe de champ magnétique des pièces polaires magnétisées (PA) par rapport à l'axe de balais associé (BA) en conservant l'attribution de pièces de moteur soumises à tolérance et en tenant compte le cas échéant d'une répartition de champ magnétique dissymétrique par rapport à l'axe de pièces polaires (PA) dans la pièce polaire respective (PS1 à PS6).

2. Procédé selon la revendication 1, comportant l'étape suivants :
- réglage d'écart angulaire du boîtier de blindage (G) avec les pièces polaires (PS1 à PS6), maintenues à l'intérieur et à magnétiser ensuite, par rapport au dispositif de magnétisation (M).

3. Procédé selon la revendication 1, comportant l'étape suivante :
- réglage d'écart angulaire du dispositif de magnétisation (M) par rapport au boîtier de blindage (G) avec les pièces polaires (PS1 à PS6), maintenues à l'intérieur et à magnétiser ensuite.

4. Procédé selon la revendication 1, comportant l'étape suivante :
- réglage d'écart angulaire de l'axe de champ magnétique du dispositif de magnétisation (M) par une magnétisation supplémentaire avec à chaque fois un décalage angulaire par rapport à l'axe de champ des bobines de magnétisation principales (MS1 à MS6).

5. Procédé selon au moins l'une des revendications 1 à 4, comportant l'étape suivante :
- détermination d'écart angulaire du réglage d'écart angulaire respectivement nécessaire par mesure des pièces montées, notamment des pièces polaires (PS1 à PS6) maintenues dans le boîtier de blindage (G) par rapport aux balais (B1 ; B2) fixés ou alignés sur le boîtier de blindage (G).

6. Procédé selon au moins l'une des revendications 1 à 5, comportant l'étape suivante :
- détermination d'écart angulaire du réglage d'écart angulaire respectivement nécessaire par comparaison de la puissance individuelle d'un moteur électrique préalablement magnétisé à la puissance maximale théorique et magnétisation consécutive en vue d'obtenir un alignement, à couple optimal, de l'axe de pièces polaires (PA) par rapport à l'axe de balais (BA).

7. Dispositif pour la mise en oeuvre du procédé selon l'une des revendications 1 à 6,
- avec un dispositif de magnétisation (M), entourant un boîtier de blindage (G) d'un moteur à collecteur alimenté par des balais (B1 ; B2) fixés dans ou par rapport au boîtier de blindage (G), avec à chaque fois des bobines de magnétisation (MS1 à MS6) .associées à des pièces polaires (PS1 à PS6) maintenues de manière circonférentielle dans le boîtier de blindage (G) ;
- avec un dispositif pour le réglage d'écart angulaire (D1, D2) du boîtier de blindage (G) par rapport au dispositif de magnétisation (M) et/ou pour le réglage d'écart angulaire du dispositif de magnétisation (M) par rapport au boîtier de blindage (G).

8. Dispositif pour la mise en oeuvre du procédé selon la revendication 4,
- avec des bobines de magnétisation supplémentaires (MSZ1 à MSZ3) ou des aimants permanents supplémentaires (DM1 à DM3) dont l'écart angulaire par rapport aux bobines de magnétisation principales (MS1 à MS6) du dispositif de magnétisation (M) est réglé à chaque fois latéralement.
